(19) Europäisches Patentamt / European Patent Office / Office européen des brevets

(11) **EP 2 471 835 A1**

(12) **EUROPEAN PATENT APPLICATION**
published in accordance with Art. 153(4) EPC

(43) Date of publication:
**04.07.2012 Bulletin 2012/27**

(21) Application number: **10820304.3**

(22) Date of filing: **03.09.2010**

(51) Int Cl.:
**C08G 63/02** (2006.01)    **C08G 69/02** (2006.01)

(86) International application number:
**PCT/JP2010/065149**

(87) International publication number:
**WO 2011/040184 (07.04.2011 Gazette 2011/14)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.09.2009 JP 2009228861**

(71) Applicant: **Polyplastics Co., Ltd.
Tokyo 108-8280 (JP)**

(72) Inventor: **TAGUCHI, Yoshiaki
Fuji-shi
Shizuoka 416-8533 (JP)**

(74) Representative: **Maiwald Patentanwalts GmbH
Elisenhof
Elisenstraße 3
80335 München (DE)**

(54) **LIQUID-CRYSTAL POLYMER AND MOLDED ARTICLES**

(57)    To provide an easily-manufactured liquid-crystalline polymer having high thermal conductivity, as well as a molded article that is formed of the liquid crystalline polymer and has a property of being highly mechanical. A liquid-crystalline polymer is used that is formed by polymerizing monomers having an asymmetrical molecular structure, in which the enthalpy of fusion ΔH measured by way of DSC (Differential Scanning Calorimetry) is greater than or equal to 2.5 J/g (joules per gram) and less than or equal to 10 J/g, and the inherent viscosity (I.V.) is greater than or equal to 5 dl/g and less than or equal to 7 dl/g. It is preferable for the monomer having asymmetrical molecular structure to be at least one selected from a group consisting of 4-hydroxybenzoic acid (HBA), 6-hydroxy-2-naphthoic acid (HNA), N-acetyl-p-aminophenol (APAP), and 4-hydroxy-4'-biphenylcarboxylic acid (HBCA).

FIG. 1A

$(R_1 \neq R_2)$

# FIG. 1B

# FIG. 1C

**Description**

TECHNICAL FIELD

The present invention relates to a liquid-crystalline polymer with a high thermal conductivity and molded articles which are produced by molding the liquid-crystalline polymer.

BACKGROUND ART

Liquid-crystalline polymers capable of forming an anisotropic molten phase are known to be a material of which dimensional accuracy and damping property are excellent and the amount of flash generated during molding is considerably less among thermoplastic resins. Heretofore, such liquid-crystalline polymers have often been used as a material for various electric and electronic parts on the basis of these advantages.

However, in recent years, there arises a problem of heat dissipation inside the parts etc. while the parts have become lighter and more compact. Therefore, molded articles imparted with heat-dissipating ability are required. In order to impart the heat-dissipating ability to the molded articles, thermal conductivity of the molded articles should be increased.

A method for improving moldability and thermal conductivity by adding alumina with a certain particle diameter to a thermoplastic resin is disclosed as a method for increasing the heat conductivity of the molded articles (Patent Document 1). It is allegedly said that the molded articles can be imparted with high thermal conductivity (heat-dissipating ability) by including the alumina with high thermal conductivity into thermoplastic resins as a filler.

A method for obtaining molded articles with a thermal conductivity by molding a composition of thermoplastic resin is also proposed in which graphite is compounded with the thermoplastic resin (Patent Document 2). The molded articles are imparted with high thermal conductivity (heat-dissipating ability) by including the graphite with high thermal conductivity into the composition of thermoplastic resin.

A method for obtaining a molded article with a thermal conductivity by molding a composition of liquid-crystalline polymer is also proposed, in which a certain fibrous thermal conductive filler and a certain plate-like, spherical or irregular heat-conductive filler are compounded in combination into the liquid-crystalline polymer (Patent Document 3).

[Patent Document 1] Japanese Unexamined Patent Application, Publication No. 2002-146187
[Patent Document 2] Japanese Unexamined Patent Application, Publication No. 2006-257174
[Patent Document 3] Japanese Unexamined Patent Application, Publication No. 2008-133382

DISCLOSURE OF THE INVENTION

Problems to be Solved by the Invention

As described above, methods for including a filler with high thermal conductivity into a resin composition of a material to be molded for the purpose of obtaining molded articles with high thermal conductivity have been disclosed. These Patent Documents disclose technologies for imparting high thermal conductivity to the molded articles by a filler with high thermal conductivity.

The technologies for compounding the filler with high thermal conductivity to a resin material is publicly known as explained above; however, if a thermoplastic resin with thermal conductivity can be developed, the thermal conductivity of molded articles will be increased still more. The liquid-crystalline polymer is known to be material of which dimensional accuracy and damping property are excellent and the amount of flash generated during molding is considerably less among thermoplastic resins. Therefore, the liquid-crystalline polymer with high thermal conductivity is required in particular.

As described above, for the purpose of increasing the thermal conductivity of molded articles, the liquid-crystalline polymer with high thermal conductivity is required. It is further necessary to take into account the properties of molded articles, other than the thermal conductivity, such as easy of production of the liquid-crystalline polymer including possibility of melt polymerization and higher mechanical strength of molded articles for the purpose of appropriate application as a material for actual parts.

The present invention has been made to solve the problems described above; and it is an object of the present invention to provide a liquid-crystalline polymer which is easily produced and has high thermal conductivity and molded articles which are formed of a composition of liquid-crystal resin containing the liquid-crystalline polymer and have high mechanical properties.

Means for Solving the Problems

The present inventors have thoroughly investigated to solve the problems described above. As a result, it has been found that a liquid-crystalline polymer formed by polymerizing monomers having an asymmetrical molecular structure, in which enthalpy of fusion ΔH measured by way of DSC (Differential Scanning Calorimetry) is greater than or equal to 2.0 J/g (joules per gram) and less than or equal to 10 J/g, and inherent viscosity (I.V.) is greater than or equal to 5 dl/g and less than or equal to 7 dl/g, increases the thermal conductivity of molded articles, thereby completing the present invention. More specifically, the present invention provides the following:

In a first aspect, a liquid-crystalline polymer formed by polymerizing monomers having an asymmetrical molecular structure is provided, in which enthalpy of fusion ΔH measured by way of DSC is greater than or equal to 2.0 J/g and less than or equal to 10 J/g, and inherent viscosity (I.V.) is greater than or equal to 5 dl/g and less than or equal to 7 dl/g.

According to a second aspect of the present invention, in the liquid-crystalline polymer according to the first aspect, the monomer having the asymmetrical molecular structure is at least one selected from a group consisting of 4-hydroxybenzoic acid (HBA), 6-hydroxy-2-naphthoic acid (HNA), N-acetyl-p-aminophenol (APAP), and 4-hydroxy-4'-biphenylcarboxylic acid (HBCA).

According to a third aspect of the present invention, in the liquid-crystalline polymer according to the first or second aspect, the monomer having the asymmetrical molecular structure includes greater than or equal to 0.1 mol% and less than or equal to 9.0 mol% of a monomer having a kink structure.

According to a fourth aspect of the present invention, in the liquid-crystalline polymer according to the third aspect, the monomer having the kink structure is 3-hydroxybenzoic acid (3-HBA) or 6-hydroxy-2-naphthoic acid (HNA).

In a fifth aspect, a liquid-crystalline polymer is provided, in which the average lattice spacing, calculated using the Bragg equation from a diffraction peak originating on a face (110) observed in a vicinity of 2θ=19˚ measured by way of a wide-angle X-ray diffraction measuring method using a sample prepared by annealing a molded article formed of the liquid-crystalline polymer according to any of the first to fourth aspects for 10 minutes under conditions of the melting point ($T_m$) + 20˚C, is greater than or equal to 4.0 Å and less than or equal to 4.5 Å.

Effects of the Invention

By preparing molded articles using the liquid-crystalline polymer of the present invention, the molded articles of which the average lattice spacing, calculated using the Bragg equation from a diffraction peak originating on a face (110) observed in a vicinity of 2θ=19˚ measured by way of a wide-angle X-ray diffraction measuring method, is greater than or equal to 4.0 Å and less than or equal to 4.5 Å can be obtained. Since the average lattice spacing can be arranged within the range described above, the molded articles prepared using the liquid-crystalline polymer of the present invention have high thermal conductivity.

In the liquid-crystalline polymer of the present invention, the enthalpy of fusion ΔH measured by DSC is greater than or equal to 2.0 J/g and less than or equal to 10 J/g, and the average lattice spacing is greater than or equal to 4.0 Å and less than or equal to 4.5 Å. As a result, the molded articles of the present invention can be provided with high thermal conductivity as well as sufficient mechanical strength.

In the liquid-crystalline polymer of the present invention, the inherent viscosity (I.V.) is greater than or equal to 5 dl/g and less than or equal to 7 dl/g. Therefore, the liquid-crystalline polymer of the present invention can be appropriately produced by a melt polymerization method. As a result, the molded articles can be easily produced.

BRIEF DESCRIPTION OF THE DRAWINGS

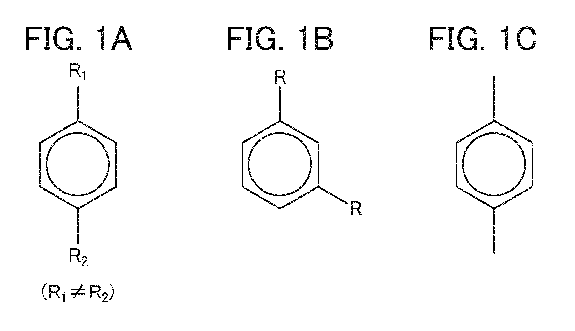

FIG. 1 is a drawing to explain a monomer having an asymmetrical molecular structure:

1A is a drawing showing a case in which the molecular skeleton is symmetrical but the molecular structure is asymmetrical when substituents are taken into account, 1B is a drawing showing a case in which the molecular structure is asymmetrical since the molecular skeleton itself is asymmetrical, and 1C is a drawing to explain a molecular skeleton;

FIG. 2 is a drawing to explain a kink structure in a case in which an aromatic is a benzene ring, for example;
FIG. 3 is a drawing to explain a kink structure in a case in which an aromatic is a naphthalene ring, for example;
FIG. 4 is a drawing to explain an aromatic dicarboxylic acid having a kink structure;
FIG. 5 is a drawing to explain an alicyclic dicarboxylic acid having a kink structure; and
FIG. 6 is a drawing to explain an aliphatic diol having a kink structure.

PREFERRED MODE FOR CARRYING OUT THE INVENTION

The present invention is explained with respect to embodiments thereof below. The present invention is not limited to the invention described below.

Liquid-crystalline polymer

The liquid-crystalline polymer of the present invention is prepared by polymerizing a monomer having an asymmetrical molecular structure and **characterized in that** the enthalpy of fusion ΔH measured by DSC is greater than or equal to 2.0 J/g and less than or equal to 10 J/g, and the inherent viscosity (I.V.) is greater than or equal to 5 dl/g and less than or equal to 7 dl/g.

The liquid-crystalline polymer indicates a melt-processable polymer which has a property capable of forming an optical anisotropic molten phase. The property of the anisotropic molten phase can be confirmed by a conventional polarization inspection method using an orthogonal polarizer. More specifically, the anisotropic molten phase can be confirmed by using a Leitz polarizing microscope and observing a molten sample on a Leitz hot stage at a magnification ratio of 40 times under nitrogen atmosphere. When the liquid-crystalline polymer applicable to the present invention is inspected between orthogonal polarizers, polarized light is transmitted therethrough and optical anisotropy is exhibited even in a molten stationary state.

The liquid-crystalline polymer of the present invention is prepared by polymerizing a monomer having an asymmetrical molecular structure. The liquid-crystalline polymers (1) to (4) below may be exemplified.

(1) Polyesters mainly composed of one or combination of two or more of aromatic hydroxycarboxylic acids and derivatives thereof having an asymmetrical molecular structure:

The present invention is **characterized in that** a monomer having an asymmetrical molecular structure is used. The asymmetrical molecular structure is exemplified by two cases, i.e. a case where the molecular skeleton is symmetrical, but the molecular structure is asymmetrical when substituents ($R_1$, $R_2$) are taken into account as shown in FIG. 1A, and a case where the molecular structure is asymmetrical since the molecular skeleton itself is asymmetrical as shown in FIG. 1B (R: substituent). Here, the molecular skeleton is defined with taking into account the position of substituents. For example, in the case of the molecular structure of FIG. 1A, the molecular skeleton is shown in FIG. 1C.

It is preferred in the present invention that the monomer having an asymmetrical molecular structure contains a certain amount of a monomer having a kink structure. The kink structure in the monomer indicates a change of direction of molecular chain (monomer-connecting direction) in the liquid-crystalline polymer.

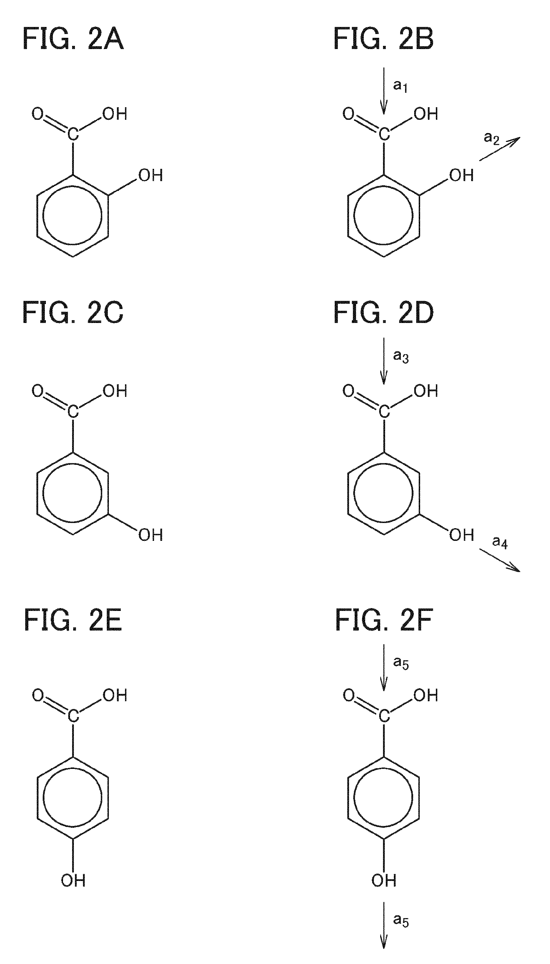

The kink structure is further explained using the example where the aromatic is a benzene ring. In the case of aromatic hydroxycarboxylic acids, a polymer is formed by bonding with other monomers at certain sites of hydroxy group and carboxyl group. Therefore, the monomer with the structure shown by FIG. 2A in terms of positional relation of hydroxy group and carboxyl group is a monomer of a kink structure. The reason is that the monomer can change the monomer-connecting direction from the arrow a1 to the arrow a2 as shown in FIG. 2B.

The monomer with the structure shown by FIG. 2C is also a monomer of a kink structure. The reason is that the monomer can change the monomer-connecting direction from the arrow a3 to the arrow a4 as shown in FIG. 2D.

On the other hand, the monomer with the structure shown by FIG. 2E is not a monomer of a kink structure. The reason is that the monomer-connecting direction does not change from the arrow a5 as shown in FIG. 2F.

Next, the kink structure is further explained using the example where the aromatic is a naphthalene ring.

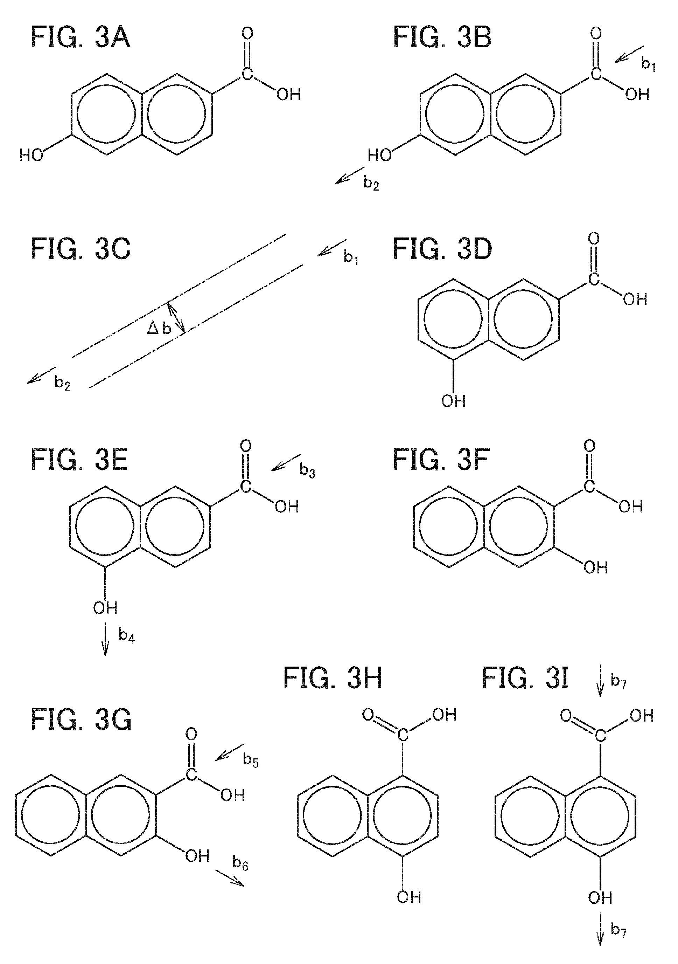

The monomer with the structure shown by FIG. 3A in terms of positional relation of hydroxy group and carboxyl group is a monomer of a kink structure. The reason is that the monomer can change the monomer-connecting direction from the arrow b1 to the arrow b2 as shown in FIG. 3B. The arrow b1 and the arrow b2 may be considered as the same direction, however, the monomer-connecting direction is parallel-shifted by Δb as shown in FIG. 3C. The directional change by the parallel shift in such a way is encompassed by the "change of direction of molecular chain (monomer-connecting direction) in the liquid-crystalline polymer".

The monomer with the structure shown by FIG. 3D is also a monomer of a kink structure. The reason is that the monomer can change the monomer-connecting direction from the arrow b3 to the arrow b4 as shown in FIG. 3E.

The monomer with the structure shown by FIG. 3F is also a monomer of a kink structure. The reason is that the monomer can change the monomer-connecting direction from the arrow b5 to the arrow b6 as shown in FIG. 3G.

On the other hand, the monomer with the structure shown by FIG. 3H is not a monomer of a kink structure. The reason is that the monomer-connecting direction does not change from the arrow b7 as shown in FIG. 3 I.

In regards to the aromatic hydroxycarboxylic acid having an asymmetrical molecular structure, conventional ones may be used. The aromatic hydroxycarboxylic acid may be exemplified by hydroxybenzoic acid and ester derivatives thereof and hydroxynaphthoic acid and ester derivatives thereof.

More specifically, the compounds below may be exemplified: hydroxybenzoic acids such as 4-hydroxybenzoic acid and 3-hydroxybenzoic acid;

alkyl-substituted products of hydroxybenzoic acid such as 3-methyl-4-hydroxybenzoic acid, 3,5-dimethyl-4-hydroxybenzoic acid, and 2,6-dimethyl-4-hydroxybenzoic acid;

alkoxy-substituted products of hydroxybenzoic acid such as 3-methoxy-4-hydroxybenzoic acid and 3,5-dimethoxy-4-hydroxybenzoic acid;

halogen-substituted products of hydroxybenzoic acid such as 3-chloro-4-hydroxybenzoic acid, 2-chloro-4-hydroxybenzoic acid, 2,3-dichloro-4-hydroxybenzoic acid, 3,5-dichloro-4-hydroxybenzoic acid, 2,5-dichloro-4-hydroxybenzoic acid, and 3-bromo-4-hydroxybenzoic acid;

hydroxynaphthoic acids such as 6-hydroxy-2-naphthoic acid, 7-hydroxy-2-naphthoic acid, and 6-hydroxy-1-naphthoic acid;

alkyl-substituted products of hydroxynaphthoic acid such as 6-hydroxy-5-methyl-2-naphthoic acid;

alkoxy-substituted products of hydroxynaphthoic acid such as 6-hydroxy-5-methoxy-2-naphthoic acid; and halogen-substituted products of hydroxynaphthoic acid such as 6-hydroxy-5-chloro-2-naphthoic acid, 6-hydroxy-7-chloro-2-naphthoic acid, and 6-hydroxy-5,7-dichloro-2-naphthoic acid.

Among the compounds described above, the compounds having a kink structure are 3-hydroxybenzoic acid, 6-hydroxy-2-naphthoic acid, 7-hydroxy-2-naphthoic acid, 6-hydroxy-1-naphthoic acid, 6-hydroxy-5-methyl-2-naphthoic acid, 6-hydroxy-5-methoxy-2-naphthoic acid, 6-hydroxy-5-chloro-2-naphthoic acid, 6-hydroxy-7-chloro-2-naphthoic acid, and 6-hydroxy-5,7-dichloro-2-naphthoic acid.

(2) Polyesters mainly composed of one or combination of two or more of aromatic hydroxycarboxylic acids and derivatives thereof having an asymmetrical molecular structure (2-A), one or combination of two or more of aromatic dicarboxylic acids, alicyclic dicarboxylic acids, and derivatives thereof having an asymmetrical molecular structure (2-B), and one or combination of two or more of aromatic diols, alicyclic diols, aliphatic diols, and derivatives thereof having an asymmetrical molecular structure (2-C):

The aromatic hydroxycarboxylic acids and derivatives thereof having an asymmetrical molecular structure (2-A) may be exemplified by ones similar to those described above.

In regards to the aromatic dicarboxylic acids, alicyclic dicarboxylic acids, and derivatives thereof having an asymmetrical molecular structure (2-B), aromatic dicarboxylic acids and alicyclic dicarboxylic acids are explained in order. The aromatic dicarboxylic acids may be those having an asymmetrical molecular structure. The meaning of the asymmetrical molecular structure is the same as described above. It is also preferred in the present invention that the monomer having an asymmetrical molecular structure contains a certain amount of a monomer having a kink structure. The kink structure in the monomer indicates a change of direction of molecular chain (monomer-connecting direction) in the liquid-crystalline polymer as described above. The meaning of the kink structure, which is the same as described above, is simply explained in relation to the example where the aromatic is a benzene ring below.

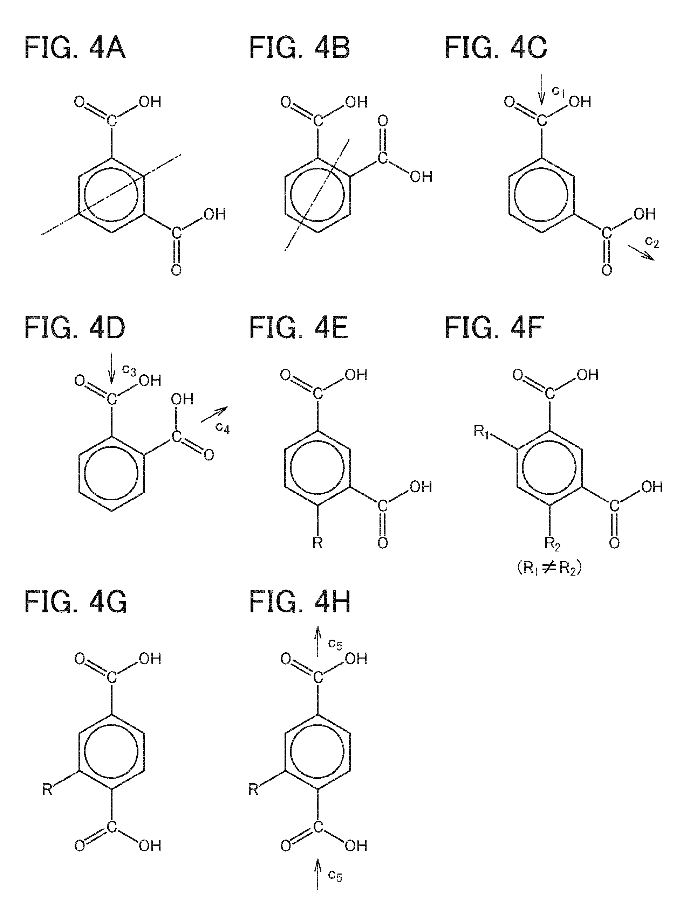

The kink structure is further explained using the example where the aromatic is a benzene ring. In the case of aromatic dicarboxylic acids, a polymer is formed by bonding with other monomers at two sites of carboxyl group. Therefore, the monomer with the structure shown by FIGs. 4A, 4B in terms of positional relation of two carboxyl groups is of a kink structure. In the structure shown by FIG. 4A, the monomer-connecting direction can be changed from the arrow c1 to the arrow c2 (see FIG. 4C). In the structure shown by FIG. 4B, the monomer-connecting direction can also be changed from the arrow c3 to the arrow c4 (see FIG. 4D). Incidentally, it is necessary in the monomer forming the liquid-crystalline polymer of the present invention that the molecular structure is asymmetrical. As shown in FIGs. 4A, 4B, these monomers have a molecular structure line-symmetric in relation to the dot-line in the figures. Therefore, such monomers having a substituent like those shown by FIGs. 4E, 4F are necessary (R, $R_1$, and $R_2$ in FIGs. 4E, 4F: substituents).

On the other hand, the monomer with the structure shown by FIG. 4G is not of a kink structure. The reason is that the monomer-connecting direction does not change from the arrow c5 as shown in FIG. 4H.

Specific examples of the aromatic dicarboxylic acid include 2,6-naphtalene dicarboxylic acid, diphenylether-3,3'-dicarboxylic acid, diphenoxyethane-3,3'-dicarboxylic acid, diphenoxyethane-3,3'-dicarboxylic acid, diphenylethane-3,3'-dicarboxylic acid, and naphthalene-2,6-dicarboxylic acid; halogen-substituted products of the aromatic dicarboxylic acids such as chloro-isophthalic acid and bromo-isophthalic acid; alkyl-substituted products of the aromatic dicarboxylic acids such as methyl-isophthalic acid, dimethyl-isophthalic acid, and ethyl-isophthalic acid; and alkoxy-substituted products of the aromatic dicarboxylic acids such as methoxy isophthalic acid and ethoxy isophthalic acid.

The alicyclic dicarboxylic acids may be those having an asymmetrical molecular structure. The meaning of the asymmetrical molecular structure is the same as described above. It is also preferred in the present invention that the monomer having an asymmetrical molecular structure contains a certain amount of a monomer having a kink structure. The kink structure in the monomer indicates a change of direction of molecular chain (monomer-connecting direction) in the liquid-crystalline polymer. The meaning of the kink structure, which is the same as described above, is simply explained in relation to the example where the alicyclic is a cyclohexane ring below.

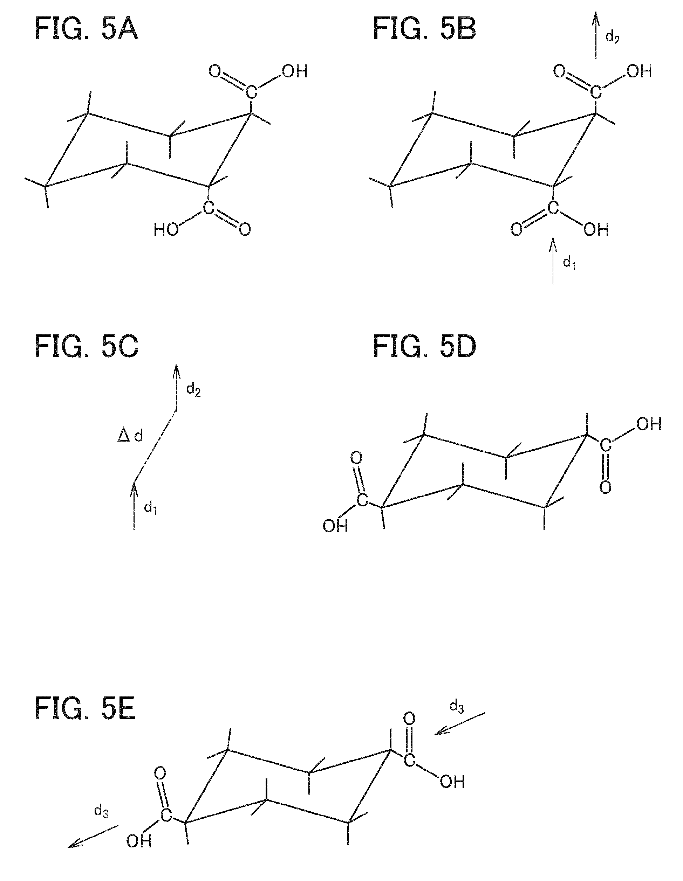

The kink structure is further explained in relation to the case where the alicyclic is cyclohexane. In the case of alicyclic dicarboxylic acids, a polymer is formed by bonding with other monomers at two sites of carboxyl group similarly to the aromatic dicarboxylic acids. The monomer with the structure shown by FIG. 5A in terms of positional relation of two carboxyl groups is of a kink structure. The reason is that the monomer can change the monomer-connecting direction from the arrow d1 to the arrow d2 as shown in FIG. 5B. The arrow d1 and the arrow d2 may be imagined as the same direction, however, the monomer-connecting direction is parallel-shifted by Δd as shown in FIG. 5C. AS described above, the directional change by the parallel shift in such a way is encompassed by the "change of direction of molecular chain (monomer-connecting direction) in the liquid-crystalline polymer".

On the other hand, the monomer with the structure shown by FIG. 5D is not a monomer of a kink structure. The reason is that the monomer-connecting direction does not change from the arrow d3 as shown in FIG. 5E.

Specific examples of the alicyclic dicarboxylic acid include alicyclic dicarboxylic acids such as cis-1,4-cyclohexane dicarboxylic acid and 1,3-cyclohexane dicarboxylic acid; alkyl-, alkoxy-, and halogen-substituted products of the alicyclic dicarboxylic acids such as trans-1,4-(1-methyl)cyclohexane dicarboxylic acid and trans-1,4-(1-chloro)cyclohexane dicarboxylic acid.

In regards to the aromatic diols, alicyclic diols, aliphatic diols, and derivatives thereof having an asymmetrical molecular structure (2-C), aromatic diols, alicyclic diols, and aliphatic diols are explained in order.

The aromatic diols may be those having an asymmetrical molecular structure. The meaning of the asymmetrical molecular structure is the same as described above. It is also preferred in the present invention that the monomer having a kink structure is used. A polymer is formed by bonding with other polymers at two sites of hydroxyl group, and there also exist aromatic diols having a kink structure. In addition, the kink structure has the same meaning as described above and may be similarly considered as the aromatic dicarboxylic acids in particular.

Specific examples of the aromatic diol include resorcin, 2,6-naphthalene diol, 3,3'-dihydroxydiphenyl, 3,3'-dihydroxydiphenyl ether, 1,4-, 1,5-, or 2,6- naphthalene diol, 2,2-bis(4-hydroxyphenyl)propane, and 2,2-bis(4-hydroxyphenyl)methane; and alkyl-, alkoxy-, or halogen-substituted products of the aromatic diols such as chlorohydroquinone, methylhydroquinone, butylhydroquinone, phenylhydroquinone, methoxyhydroquinone, phenoxyhydroquinone, 4-chlororesorcin, and 4-methylresorcin.

The alicyclic diols may be of an asymmetrical molecular structure. The meaning of the asymmetrical molecular structure is the same as described above. A liquid-crystalline polymer prepared by using a certain amount of a monomer of a kink structure is also preferable in the present invention. A polymer is formed by bonding with other polymers at two sites of hydroxyl group, and there also exist alicyclic diols of a kink structure. The kink structure has the same meaning as described above and may be similarly considered as the alicyclic dicarboxylic acids in particular.

Specific examples of the alicyclic diol include alicyclic diols such as cis-1,4-cyclohexanediol, trans-1,4-cyclohexanedimethanol, cis-1,4-cyclohexanedimethanol, trans-1,3-cyclohexanediol, cis-1,2-cyclohexanediol, and trans-1,3-cyclohexanedimethanol; and alkyl-, alkoxy-, or halogen-substituted products of the aromatic diols.

The aliphatic diol is not particularly limited as long as it has an asymmetrical molecular structure. The meaning of the asymmetrical molecular structure is the same as described above. A liquid-crystalline polymer prepared by using a certain amount of a monomer of a kink structure is also preferable in the present invention. The meaning of the kink structure, which is the same as described above, is simply explained in relation to aliphatic diols having a kink structure.

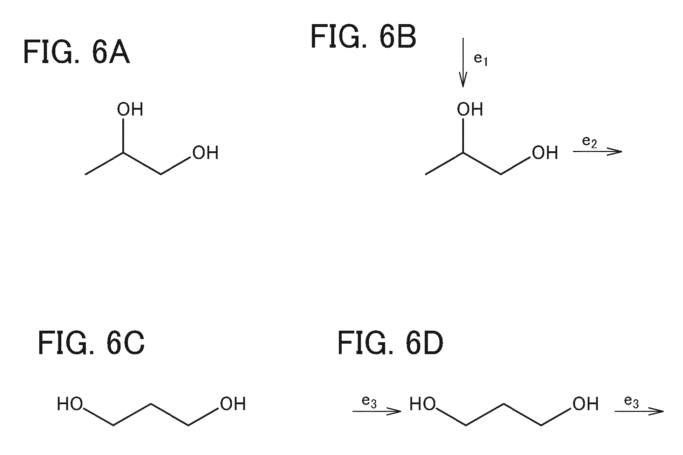

The aliphatic diol having a kink structure is simply explained in relation to dipropanol as an example. In the case of aliphatic diols, a polymer is formed by bonding with other polymers at two sites of hydroxyl group similarly as aromatic diols. The monomer with the structure shown by FIG. 6A in terms of positional relation of two hydroxyl groups is of a kink structure. The reason is that the monomer can change the monomer-connecting direction from the arrow e1 to the arrow e2 as shown in FIG. 6B.

On the other hand, the monomer with the structure shown by FIG. 6C is not a monomer of a kink structure, since the monomer-connecting direction does not change from the arrow e3 as shown in FIG. 6D.

Specific examples of the aliphatic diol include linear or branched aliphatic diols such as 1,2-propanediol, 1,3-butanediol, and neopentyl glycol.

(3) Polyester amides mainly composed of one or combination of two or more of aromatic hydroxycarboxylic acids and derivatives thereof having an asymmetrical molecular structure (3-A), one or combination of two or more of aromatic hydroxyamines, aromatic diamines, and derivatives thereof having an asymmetrical molecular structure (3-B), and one or combination of two or more of aromatic dicarboxylic acids, alicyclic dicarboxylic acids, and derivatives thereof having an asymmetrical molecular structure (3-C):

The aromatic hydroxycarboxylic acids and derivatives thereof having an asymmetrical molecular structure (3-A) are similar to those explained in relation to (1), thus the explanation thereof is omitted.

The aromatic hydroxyamines, aromatic diamines, and derivatives thereof having an asymmetrical molecular structure (3-B) are explained.

The aromatic hydroxyamines may be those having an asymmetrical molecular structure. The meaning of the asymmetrical molecular structure is the same as described above. Aromatic hydroxyamines having a kink structure may also be used as an asymmetrical monomer for forming the liquid-crystalline polymer of the present invention. The meaning of the kink structure is the same as described above. In the aromatic hydroxyamines, since a polymer is formed by bonding with other monomers at certain sites of hydroxyl group and amino group, the positional relation of hydroxyl group and amino group is important from the viewpoint of the kink structure. The kink structure of aromatic hydroxyamines may be envisaged similarly to the aromatic hydroxycarboxylic acids in particular.

The aromatic diamines may be those having an asymmetrical molecular structure. The meaning of the asymmetrical molecular structure is the same as described above. Aromatic diamines having a kink structure may also be used as an asymmetrical monomer for forming the liquid-crystalline polymer of the present invention. The meaning of the kink structure is the same as described above. In the aromatic diamines, since a polymer is formed by bonding with other monomers at the two sites of amino group, the two sites of amino group is important from the viewpoint of the kink structure. The kink structure of the aromatic diamines may be envisaged similarly to the aromatic hydroxycarboxylic acids in particular.

Specific examples of the aromatic hydroxyamine and aromatic diamine include 4-aminophenol, 4-acetamidophenol, N-methyl-1,4-phenylenediamine, 3-aminophenol, 3-methyl-4-aminophenol, 2-chloro-4-aminophenol, 4-amino-1-naphthol, 4-amino-4'-hydroxydiphenyl, 4-amino-4'-hydroxydiphenylether, 4-amino-4'-hydroxydiphenylmethane, 4-amino-4'-hydroxydiphenylsulfide, and 2,5-diaminotoluene. Derivatives of acetyl, propionyl, etc. may be exemplified as the ester derivatives and/or amido derivatives of the aromatic hydroxyamine and aromatic diamine.

The aromatic dicarboxylic acids, alicyclic dicarboxylic acids, and derivatives thereof having an asymmetrical molecular structure (3-C) are similar to those explained in relation to (2-B), thus the explanation thereof is omitted.

(4) Polyester amides mainly composed of one or combination of two or more of aromatic hydroxycarboxylic acids and derivatives thereof having an asymmetrical molecular structure (4-A), one or combination of two or more of aromatic hydroxyamines, aromatic diamines, and derivatives thereof having an asymmetrical molecular structure (4-B), one or combination of two or more of aromatic dicarboxylic acids, alicyclic dicarboxylic acids, and derivatives thereof having an asymmetrical molecular structure (4-C), and aromatic diols, alicyclic diols, aliphatic diols, and derivatives thereof having an asymmetrical molecular structure (4-D) are exemplified.

The aromatic hydroxycarboxylic acids and derivatives thereof having an asymmetrical molecular structure (4-A) are similar to those explained in relation to (1), thus the explanation thereof is omitted.

The aromatic hydroxyamines, aromatic diamines, and derivatives thereof having an asymmetrical molecular structure (4-B) are similar to those explained in relation to (3-B), thus the explanation thereof is omitted.

The aromatic dicarboxylic acids, alicyclic dicarboxylic acids, and derivatives thereof having an asymmetrical molecular structure (4-C) are similar to those explained in relation to (2-B), thus the explanation thereof is omitted.

The aromatic diols, alicyclic diols, aliphatic diols, and derivatives thereof having an asymmetrical molecular structure (4-D) are similar to those explained in relation to (2-C), thus the explanation thereof is omitted.

The liquid-crystalline polymers (1) to (4) may be combined with a molecular weight adjuster as required in addition to the components (monomers) described above.

Preferable examples of specific compounds for forming the liquid-crystalline polymer of the present invention may be exemplified by 4-hydroxybenzoic acid (4-HBA), 6-hydroxy-2-naphthoic acid (HNA), N-acetyl-aminobenzoic acid (ABA), and 4-hydroxy-4'-biphenylcarboxylic acid (HBCA). Additionally, specific examples of compounds of a kink structure suited to the present invention include 3-hydroxybenzoic acid (3-HBA) and 6-hydroxy-2-naphthoic acid (HNA).

Enthalpy of Fusion

In the liquid-crystalline polymer of the present invention, the enthalpy of fusion $\Delta H$ is greater than or equal to 2.0 J/g and less than or equal to 10 J/g. The enthalpy of fusion $\Delta H$ is adjusted by changing the monomer components of the liquid-crystalline polymer, adjusting a molecular weight of the liquid-crystalline polymer, etc. Here, enthalpy of fusion $\Delta H$ are those measured by differential scanning calorimetry (DSC). The enthalpy of fusion $\Delta H$ is preferably greater

than or equal to 2.0 J/g for the reason that proportion of high orderliness structure (crystalline structure) tends to be high in polymer solid, and is preferably less than or equal to 10 J/g for the reason that melt and solidification steps are easily controlled as an injection molding material. More preferably, the enthalpy of fusion ∆H is within the range of greater than or equal to 4.0 J/g and less than or equal to 8.0 J/g.

Particularly preferable monomers for adjusting the enthalpy of fusion ∆H within the range are those having two or more aromatic rings which are rotatably bonded, and 4-hydroxy-4'-biphenylcarboxylic acid (HBCA) is exemplified as the particularly preferable monomer. When the enthalpy of fusion ∆H becomes higher, crystallinity tends to increase and molecules tend to become dense. As a result, the thermal conductivity tends to increase.

Content of Monomer Having Kink Structure

The liquid-crystalline polymer of the present invention is prepared by polymerizing a monomer having an asymmetrical molecular structure; preferably, greater than or equal to 0.1 mol% and less than or equal to 9.0 mol% of the monomer having a kink structure is included in the monomers having an asymmetrical molecular structure as the raw material. The amount of the monomer used having a kink structure is preferably greater than or equal to 0.1 mol% based on total amount of monomers for the reason that a polymer with a injection-moldable melting point can be obtained, and the amount of the monomer used having a kink structure is preferably less than or equal to 9.0 mol% for the reason that ∆H is higher and a desired thermal diffusivity can be obtained. The monomers described above may be exemplified as the monomer having a kink structure, and 6-hydroxy-2-naphthoic acid (HNA) is particularly preferable.

inherent Viscosity

In the liquid-crystalline polymer of the present invention, the inherent viscosity (I.V.) is greater than or equal to 5 dl/g and less than or equal to 7 dl/g. The inherent viscosity are those measured in orthochlorophenol at 25˚C. When the inherent viscosity is within the range described above, the liquid-crystalline polymer can be produced by melt polymerization. More preferable range of the inherent viscosity is greater than or equal to 5.5 dl/g and less than or equal to 6.5 dl/g. The inherent viscosity depends on molecular weights and species of monomers used. Specifically, the inherent viscosity tends to increase when polymerization period is lengthened and the inherent viscosity tends to decrease when polymerization period is shortened. The inherent viscosity can be adjusted in this way.

The present invention is **characterized in that** the inherent viscosity and the enthalpy of fusion ∆H are adjusted within a certain range, and these properties depend on molecular weights and species of monomers used in particular. Preferably, 4-hydroxybenzoic acid (4-HBA), 6-hydroxy-2-naphthoic acid (HNA), or 4-hydroxy-4'-biphenylcarboxylic acid (HBCA) is used since the inherent viscosity and the enthalpy of fusion can be easily adjusted within a certain range.

Method of Producing Liquid-crystalline polymer

The method of producing the liquid-crystalline polymer of the present invention may be conventional polymerization processes without particular limitation thereto. Molded articles with high thermal conductivity and sufficient mechanical strength may be obtained by any polymerization processes. The conventional polymerization processes are exemplified by melt polymerization processes, solid-phase polymerization processes, solution polymerization processes, interfacial polymerization processes, suspension polymerization processes, etc. Among these polymerization processes, melt polymerization processes are preferable in general from the viewpoint of process simplicity and production cost. The liquid-crystalline polymer of the present invention can be favorably produced by melt polymerization since the inherent viscosity is within the range described above. One of the features of the present invention is that it can be produced by melt polymerization processes.

Molded article

The molded article of the present invention is formed of a composition of liquid-crystal resin containing the liquid-crystalline polymer. The liquid-crystalline polymer of the present invention is prepared by polymerizing the monomer having an asymmetrical molecular structure, as described above, and the enthalpy of fusion ∆H measured by DSC is adjusted within the range greater than or equal to 2.0 J/g and less than or equal to 10 J/g and the inherent viscosity (I.V.) is adjusted within the range greater than or equal to 5 dl/g and less than or equal to 7 dl/g. As a result, the molded article of the present invention has high thermal conductivity and is provided with sufficient mechanical strength. Furthermore, the liquid-crystalline polymer of the present invention in the material can be easily produced, therefore, the molded article of the present invention can be easily produced.

In the molded article of the present invention, the average lattice spacing, calculated using the Bragg equation from a diffraction peak originating on a face (110) observed in a vicinity of 2θ=19˚ measured by way of a wide-angle X-ray diffraction measuring method, is greater than or equal to 4.0 Å and less than or equal to 4.5 Å. As a result, the molded article of the present invention has high thermal conductivity.

The molded article of the present invention is provided with sufficient mechanical strength. The sufficient mechanical strength indicates that fiber strength measured by way of the method described in Examples is greater than or equal to 50 MPa, for example.

The composition of liquid-crystal resin as the raw material of the molded article is not particularly limited as long as it contains the liquid-crystalline polymer of the present invention. The composition of liquid-crystal resin may be added with conventional additives such as other resins, antioxidants, and pigments within a range not hindering the purpose of the present invention. A preferable component other than the liquid-crystalline polymer of the present invention is a filler with a heat conductivity greater than or equal to 2 W/m·K and less than or equal to 100 W/m·K. The heat conductivity greater than or equal to 2 is preferable since the thermal conductivity of molded articles can be further increased, and the heat conductivity less than or equal to 100 is preferable since the polymer is unlikely to be decomposed during compounding into polyester resin (the higher value requires the higher ionicity of components). The filler with a heat conductivity of 2 to 100 is exemplified by talc, titanium oxide, graphite, boron nitride, etc. The content of the filler is preferably greater than or equal to 10 parts by mass and less than or equal to 500 parts by mass based on 100 parts by mass of the liquid-crystalline polymer.

The method of producing the molded article of the present invention, which is not particularly limited, may be preferably selected from conventional production methods depending on species and shape of the molded article.

EXAMPLES

The present invention is explained more specifically with reference to examples below. However, the present invention is not limited to the following description.

Liquid-crystalline polymers used in Examples and Comparative Examples were prepared by the method below.

Example 1

The raw material monomers, the metal catalyst, and the acylating agent shown below were introduced into a polymerization vessel equipped with a stirrer, a reflux column, a monomer inlet, a nitrogen inlet, and a depressurizing/discharging line, which was then flushed with nitrogen gas.

(I) 4-hydroxybenzoic acid (4-HBA): 217.1 g (73 mol%)
(II) 6-hydroxy-2-naphthoic acid (HNA): 20.3 g (5 mol%)
(III) 4-dihydroxybiphenyl-4-carboxylic acid (HBCA): 101.5 g (22 mol%)
catalyst of potassium acetate: 22.5 mg
acetic anhydride: 224.2 g

After introducing the raw material, the temperature of the reactant was raised to 140˚C, followed by allowing to react at 140˚C for 1 hour. Thereafter, the temperature was raised to 320˚C over 5 hours, then the pressure was reduced to 10 Torr (i.e. 1330 Pa) over 20 minutes, followed by subjecting to melt polymerization while distilling acetic acid, excessive acetic anhydride, and other low-boiling substances. When a stirring torque reached about 1.5 kgf·cm, the pressure was changed to a pressurized condition through normal pressure from a reduced-pressure condition by introducing nitrogen, and a polymer was discharged as a strand from a lower part of the polymerization vessel. The strand was cut into pellets.

Example 2, Comparative Examples 1 to 5

Polymers were obtained similarly as Example 1 except that species and amounts of monomers introduced of raw material were set to those shown in Tables 1, 2, and final polymerization temperature was set to a temperature of Tm of the resulting polymer plus from 20˚C to 40˚C. The results are shown in Tables 1, 2. Abbreviated names of raw material monomers used are indicated below.

(IV) isophthalic acid (TA)
(V) 4,4'-dihydroxybiphenyl (BP)

Examples 3, 4, Comparative Examples 6, 7

The raw material monomers, the metal catalyst, and the acylating agent shown below were introduced into a polymerization vessel equipped with a stirrer, a reflux column, a monomer inlet, a nitrogen inlet, and a depressurizing/discharging line, which was then flushed with nitrogen gas.

(I) 4-hydroxybenzoic acid (4-HBA): 215.1 g (73 mol%)
(II) 4-dihydroxybiphenyl-4-carboxylic acid (HBCA): 123.4 g (27 mol%)
catalyst of potassium acetate: 22.5 mg
acetic anhydride: 222.1 g

In Examples 3 and 4, after the raw material was introduced, the temperature of the reactant was raised to 140˚C, followed by allowing to react at 140˚C for 1 hour. Thereafter, the temperature was raised to 380˚C over 5 hours, then the pressure was reduced to 10 Torr (i.e. 1330 Pa) over 20 minutes, followed by subjecting to melt polymerization while distilling acetic acid, excessive acetic anhydride, and other low-boiling substances. When a stirring torque reached about 1.5 kgf·cm, the pressure was changed to a pressurized condition through normal pressure from a reduced-pressure condition by introducing nitrogen, and a polymer was discharged as a strand from a lower part of the polymerization vessel. The strand was cut into pellets.

In Comparative Example 6, procedures were performed until melt polymerization similarly to those of Examples 3 and 4, then after the melt polymerization, when a stirring torque reached about 0.15 kgf·cm, the pressure was changed to a pressurized condition through normal pressure from a reduced-pressure condition by introducing nitrogen, and a polymer was discharged as a strand from a lower part of the polymerization vessel. The strand was cut into pellets.

In Comparative Example 7, procedures were performed until melt polymerization similarly to those of Examples 3 and 4, then after the melt polymerization, when a stirring torque reached about 2.5 kgf·cm, the pressure was changed to a pressurized condition through normal pressure from a reduced-pressure condition by introducing nitrogen; but since the discharge was difficult, a polymer was collected by decomposing the polymerization vessel.

Examples 5, 6

The raw material monomers in the ratios shown in Table 1, the metal catalyst, and the acylating agent shown below were introduced into a polymerization vessel equipped with a stirrer, a reflux column, a monomer inlet, a nitrogen inlet, and a depressurizing/discharging line, which was then flushed with nitrogen gas.

(I) 4-hydroxybenzoic acid (4-HBA)
(II) 4-dihydroxybiphenyl-4-carboxylic acid (HBCA)
(VI) 3-hydroxybenzoic acid (3-HBA)

catalyst of potassium acetate: 22.5 mg
acetic anhydride: 222.1 g

In Examples 5 and 6, after the raw material was introduced, the temperature of the reactant was raised to 140˚C, followed by allowing to react at 140˚C for 1 hour. Thereafter, the temperature was raised to 340˚C in Example 5 and 330˚C in Example 6 over 3.5 hours, then the pressure was reduced to 10 Torr (i.e. 1330 Pa) over 20 minutes, followed by subjecting to melt polymerization while distilling acetic acid, excessive acetic anhydride, and other low-boiling substances. When a stirring torque reached about 1.5 kgf·cm, the pressure was changed to a pressurized condition through normal pressure from a reduced-pressure condition by introducing nitrogen, and a polymer was discharged as a strand from a lower part of the polymerization vessel. The strand was cut into pellets.

Evaluation

Molded articles necessary for the evaluation below were prepared using the liquid-crystalline polymers of Examples and Comparative Examples, and properties of the liquid-crystalline polymers and the molded articles were evaluated. The evaluation results are shown in Tables 1 and 2.

Melting Point

Measurement was performed using DSC Q-1000 (made by TA Instruments Inc.) under the condition below, and the values of melting point Tm and enthalpy of fusion ΔH were determined from the second measurement.

(Condition)

Starting from 50˚C, changing to Tm+40˚C by 20˚C/min, holding at Tm+40˚C for 3 minutes, changing to 50˚C by 20˚C/min, holding at 50˚C for 3 minutes, changing to Tm+40˚C by 20˚C/min, and holding at Tm+40˚C for 3 minutes.

Measurement of X-ray Diffraction

A disk-shaped molded article of diameter 20 mm and thickness 2 mm, which had been anneal-treated at a temperature of Tm+20˚C for 10 minutes, was used as a sample and measured using RINT (made by Rigaku Co.). Here, the disk-shaped molded article was processed into a predetermined size by heating the resulting pellet-shaped polymer to a temperature of Tm+20˚C and hot-pressing at a pressure of 10 MPa.
From the resulting X-ray diffraction pattern, an average lattice spacing (d-spacing) was calculated from a peak top of a strong diffraction peak in a vicinity of diffraction angle 2θ=19˚ attributing to the face (110).

$$2d \cdot \sin\theta = n \cdot \lambda$$

n: reflection order (n=1)
λ: X-ray wavelength (1.5418 Å)

inherent Viscosity (I.V.)

The resulting polymer of 20 mg was collected, then which was dissolved into 10 cc of pentafluorophenol under a temperature of 60˚C. Then 10 cc of chloroform was added thereto and it was measured using a capillary viscometer (Ubbelohde) under a temperature of 30˚C.

Thermal Diffusivity

Heat conductivity was measured using a disk-shaped molded article of diameter 20 mm and thickness 100 μm by ai-Phase Mobile 1u (made by ai-Phase Co., Ltd.) based on temperature wave analysis. Here, the disk-shaped molded article was processed into a predetermined size by heating the resulting pellet-shaped polymer to a temperature of Tm+20˚C and hot-pressing at a pressure of 10 MPa.

Measurement of Fiber Strength

The resulting polymer was passed through a capillary of 0.5 mmΦ×20 mm at a temperature of Tm+20˚C of the polymer using Capilograph 1B (made by Toyo Seiki Seisaku-Sho, Ltd.), thereby a fiber was prepared. The resulting fiber was subjected to a tensile test at a speed of 100 mm/min using Tensilon (made by Toyo Seiki Seisaku-Sho, Ltd.) to measure fiber strength.

Evaluation of Productivity

When a polymer was prepared by the production method described below, the appearance of the polymer discharged from a lower part of the polymerization vessel was visually observed and evaluated based on the criteria below.

Productivity ○: able to be discharged as a strand from the lower part of the polymerization vessel and cut by a strand cutter;
Productivity ×: unable to be discharged from the lower part of the polymerization vessel.

[Table 1]

| | | Examples 1 | Examples 2 | Examples 3 | Examples 4 | Examples 5 | Examples 6 |
|---|---|---|---|---|---|---|---|
| monomer (mol%) | 4-HBA | 73 | 73 | 73 | 73 | 73 | 73 |
| | HNA | 5 | 2 | | | | |
| | 3-HBA | | | | | 2 | 7 |
| | HBCA | 22 | 25 | 27 | 27 | 25 | 20 |
| Melting Point ˚C | | 314 | 332 | 366 | 358 | 311 | 298 |

(continued)

|  | Examples 1 | Examples 2 | Examples 3 | Examples 4 | Examples 5 | Examples 6 |
|---|---|---|---|---|---|---|
| enthalpy of fusion J·g$^{-1}$ | 8.3 | 6.6 | 6.2 | 5.4 | 2.4 | 2.1 |
| average lattice spacing Å | 4.46 | 4.47 | 4.48 | 4.47 | 4.41 | 4.49 |
| inherent Viscosity dL· g$^{-1}$ | 6.67 | 6.45 | 6.89 | 5.32 | 6.77 | 6.82 |
| Thermal Diffusivity m$^2$s$^{-1}$ | 2.02E-07 | 2.24E-07 | 2.91E-07 | 2.43E-07 | 2.20E-07 | 2.19E-07 |
| Fiber Strength MPa | 71 | 65 | 62 | 51 | 59 | 53 |
| Productivity | ○ | ○ | ○ | ○ | ○ | ○ |

[Table 2]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| monomer (mol%) | 4-HBA | 73 | 73 | 73 | 66 | 64 | 73 | 73 |
| | HNA | 27 | 20 | 10 | 20 | 18 | | |
| | HBCA | | 7 | 17 | | | 27 | 27 |
| | TA | | | | 7 | 9 | | |
| | BP | | | | 7 | 9 | | |
| Melting Point ˚C | | 280 | 280 | 294 | 251 | 248 | 345 | 368 |
| enthalpy of fusion J·g$^{-1}$ | | 2.0 | 0.90 | 1.3 | 0.7 | 0.9 | 1.06 | 6.4 |
| average lattice spacing Å | | 4.53 | 4.52 | 4.51 | 4.57 | 4.59 | 4.46 | 4.49 |
| Inherent Viscosity dL· g$^{-1}$ | | 4.67 | 5.67 | 5.49 | 4.14 | 4.69 | 4.76 | 7.42 |
| Thermal Diffusivity m$^2$s$^{-1}$ | | 1.77E -07 | 1.79E -07 | 1.73E -07 | 1.38E -07 | 1.14E -07 | 2.23E -07 | 2.99E -07 |
| Fiber Strength MPa | | 118 | 107 | 110 | 82 | 76 | 47 | 67 |
| Productive | | ○ | ○ | ○ | ○ | ○ | ○ | × |

It was confirmed that heat conductivity of molded articles is high and fiber strength is increased when liquid-crystalline polymers, of which enthalpy of fusion ΔH is greater than or equal to 2.0 J/g and less than or equal to 10 J/g and inherent viscosity (I.V.) is greater than or equal to 5 dl/g and less than or equal to 7 dl/g, are used. That is, the molded articles prepared using the liquid-crystalline polymer of the present invention are excellent in thermal conductivity and mechanical strength. Furthermore, since the inherent viscosity (I.V.) is greater than or equal to 5 dl/g and less than or equal to 7 dl/g, production thereof is easy.

In the present invention, the asymmetrical monomer is used, the enthalpy of fusion ΔH of the liquid-crystalline polymer is adjusted to greater than or equal to 2.0 J/g and less than or equal to 10 J/g, and the inherent viscosity (I.V.) is adjusted to greater than or equal to 5 dl/g and less than or equal to 7 dl/g, thereby molecular weight and structure of the liquid-crystalline polymer are favorably adjusted, consequently, the liquid-crystalline polymer becomes dense within the molded articles, thermal conductivity of the molded articles is increased, mechanical strength is increased, and also the production becomes easy.

As is apparent by comparing Examples 1, 2, 5, and 6 and Examples 3, 4, liquid-crystalline polymers containing a certain amount of a monomer of a kink structure tend to be high in mechanical strength (fiber strength). Particularly, the mechanical strength becomes higher when HNA is used as the monomer of a kink structure.

**Claims**

1. A liquid-crystalline polymer formed by polymerizing monomers having an asymmetrical molecular structure, wherein enthalpy of fusion ΔH measured by way of DSC (Differential Scanning Calorimetry) is greater than or equal to 2.0 J/g (joules per gram) and less than or equal to 10 J/g, and inherent viscosity (I.V.) is greater than or equal to 5 dl/g and less than or equal to 7 dl/g.

2. The liquid-crystalline polymer according to claim 1, wherein the monomer having the asymmetrical molecular structure is at least one selected from a group consisting of 4-hydroxybenzoic acid (HBA), 6-hydroxy-2-naphthoic acid (HNA), N-acetyl-p-aminophenol (APAP), and 4-hydroxy-4'-biphenylcarboxylic acid (HBCA).

3. The liquid-crystalline polymer according to claim 1 or 2, wherein the monomer having the asymmetrical molecular structure includes greater than or equal to 0.1 mol% and less than or equal to 9.0 mol% of a monomer having a kink structure.

4. The liquid-crystalline polymer according to claim 3, wherein the monomer having the kink structure is m-HBA or HNA.

5. A liquid-crystalline polymer, wherein the average lattice spacing, calculated using the Bragg equation from a diffraction peak originating on a face (110) observed in a vicinity of $2\theta=19°$ measured by way of a wide-angle X-ray diffraction measuring method using a sample prepared by annealing a molded article formed of the liquid-crystalline polymer according to any of claims 1 to 4 for 10 minutes under conditions of the melting point ($T_m$) + 20°C, is greater than or equal to 4.0 Å and less than or equal to 4.5 Å.

FIG. 1A

$R_1$

$R_2$

$(R_1 \neq R_2)$

FIG. 1B

R

R

FIG. 1C

# FIG. 2A

# FIG. 2B

# FIG. 2C

# FIG. 2D

# FIG. 2E

# FIG. 2F

FIG. 3A

FIG. 3B

FIG. 3C

FIG. 3D

FIG. 3E

FIG. 3F

FIG. 3G

FIG. 3H

FIG. 3I

FIG. 4A

FIG. 4B

FIG. 4C

FIG. 4D

FIG. 4E

FIG. 4F

$(R_1 \neq R_2)$

FIG. 4G

FIG. 4H

FIG. 5A

FIG. 5B

FIG. 5C

FIG. 5D

FIG. 5E

FIG. 6A

FIG. 6B

FIG. 6C

FIG. 6D

| **INTERNATIONAL SEARCH REPORT** | International application No. |
|---|---|
| | PCT/JP2010/065149 |

| A. CLASSIFICATION OF SUBJECT MATTER |
|---|
| *C08G63/02*(2006.01)i, *C08G69/02*(2006.01)i |
| According to International Patent Classification (IPC) or to both national classification and IPC |

| B. FIELDS SEARCHED |
|---|
| Minimum documentation searched (classification system followed by classification symbols) |
| C08G63/02, C08G69/02 |
| Documentation searched other than minimum documentation to the extent that such documents are included in the fields searched |
| Jitsuyo Shinan Koho        1922-1996   Jitsuyo Shinan Toroku Koho   1996-2010<br>Kokai Jitsuyo Shinan Koho   1971-2010   Toroku Jitsuyo Shinan Koho   1994-2010 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | JP 2008-240229 A  (Toray Industries, Inc.),<br>09 October 2008 (09.10.2008),<br>entire text<br>(Family: none) | 1-5 |
| A | JP 2006-089714 A  (Toray Industries, Inc.),<br>06 April 2006 (06.04.2006),<br>entire text<br>& US 2007/0243376 A1      & EP 1760104 A1<br>& WO 2005/123804 A1      & CN 1972981 A | 1-5 |
| A | JP 08-041298 A  (Nippon Petrochemicals Co.,<br>Ltd.),<br>13 February 1996 (13.02.1996),<br>entire text<br>(Family: none) | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 November, 2010 (17.11.10) | 30 November, 2010 (30.11.10) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/065149 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 02-158621 A (Tosoh Corp.),<br>19 June 1990 (19.06.1990),<br>entire text<br>(Family: none) | 1-5 |
| A | JP 01-266131 A (Mitsubishi Kasei Corp.),<br>24 October 1990 (24.10.1990),<br>entire text<br>(Family: none) | 1-5 |
| A | JP 55-094930 A (Sumitomo Chemical Co., Ltd.),<br>18 July 1980 (18.07.1980),<br>entire text<br>& US 4311823 A          & GB 2039509 A<br>& DE 3000610 A          & FR 2446297 A<br>& BE 881056 A           & NL 8000099 A<br>& IT 1188982 B          & IT 8047557 D0 | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002146187 A
- JP 2006257174 A

- JP 2008133382 A